# EUROPEAN PATENT APPLICATION

(11) **EP 4 703 067 A1**
(43) Date of publication of application: **04.03.2026**
(21) Application number: 24796941.3
(22) Date of filing: 19.04.2024
(51) Int. Cl.: B22F 7/04, B22F 1/00, B22F 1/05, B22F 1/107, B22F 3/14, H01B 1/22

(54) **JOINING MATERIAL AND METHOD FOR PRODUCING JOINED BODY**

(30) Priority: 25.04.2023 JP 2023071341
(71) Applicant: Toppan Holdings Inc., Tokyo 110-0016 (JP)
(72) Inventor: SEKIGUCHI Takuya, Tokyo 110-0016 (JP); MORI Akihito, Tokyo 110-0016 (JP); MORII Masato, Tokyo 110-0016 (JP)
(74) Representative: Plasseraud IP
(86) International application number: PCT/JP2024/015612
(87) International publication number: WO 2024/225194

(57) **Abstract**

A joining material includes: metal particles containing metal particles (a); and a solvent for dispersing the metal particles, wherein the joining material has a viscosity, as measured according to JIS Z 3285:2017, of 70 Pa·s or greater, and the metal particles (a) have a particle size D50 at a cumulative volume of 50%, as measured by laser diffraction/scattering particle size distribution measurement, of greater than 0.15 µm and less than 0.8 µm.

## Description

### [Technical Field]

The present invention relates to a joining material and a method of producing a joined body.

The present application is based on and claims the benefit of priority from Japanese Patent Application No. 2023-071341, filed April 25, 2023, the content of which is incorporated herein by reference.

### [Background Art]

Silver and copper have high thermal conductivity and a high melting point, and are regarded as promising raw materials of joining materials for joining conductive components together, as an alternative to solder. In particular, silver and copper are highly promising as packaging materials for power semiconductors, which have high heat generation density.

As a method for joining conductive components together using a joining material containing silver, an example method is disclosed in which a joining material containing silver nanoparticles is applied to a member to be joined, the joining material is heated for pre-firing, another member to be joined is placed on the heated joining material, and the heated joining material between these members to be joined is subjected to main firing at a temperature higher than the pre-firing temperature to thereby form a joining portion that joins the members to be joined together (see PTL 1).

### [Citation List]

### [Patent Literature]

PTL 1: WO 2012/070262

### [Summary of Invention]

### [Technical Problem]

However, the method described in PTL 1 has a problem in that, since a member to be joined (conductive component) is placed on the pre-fired joining material, which is in a dried or semi-dried state at the time of pre-firing, the member to be joined placed later is not sufficiently fixed to the pre-fired joining material. In this case, if a force is applied to the laminate of these members to be joined and the pre-fired joining material during transportation before main firing, the members to be joined on the pre-fired joining material may shift.

On the other hand, if a joining material is disposed on one conductive component, the other conductive component is disposed on the joining material without drying the joining material, and then the joining material is dried and fired, the positions of the conductive components can be suppressed from shifting.

In this case, however, voids are generated between the conductive component placed later and the joining material before drying. If the joining material is dried and fired in this state to obtain a joined body of the conductive components, voids may remain in the joining portion. In such a joined body having many voids, the electrical conductivity at the joining portion and the strength of the joining portion are reduced. There are no known joining material or method of producing a joined body that can solve these problems.

The present invention has been made to provide a joining material for forming a joining portion that joins conductive components together, which can suppress generation of voids in the joining portion even when a joined body of conductive components is produced by placing a conductive component on an undried joining material disposed on another conductive component, drying the joining material, and firing the dried joining material to form a joining portion.

### [Solution to Problem]

In order to solve the above problems, the present invention adopts the following configuration.
[1] A joining material including: metal particles containing metal particles (a); and a solvent for dispersing the metal particles, wherein the joining material has a viscosity, as measured according to JIS Z 3285:2017, of 70 Pa·s or greater, and the metal particles (a) have a particle size D50 at a cumulative volume of 50%, as measured by laser diffraction/scattering particle size distribution measurement, of greater than 0.15 µm and less than 0.8 µm.
[2] The joining material according to [1], wherein the metal particles (a) are silver particles.
[3] The joining material according to [1] or [2], wherein the joining material has a thixotropic index, as measured according to JIS Z 3285:2017, in a range of 0.55 to 0.95.
[4] The joining material according to any one of [1] to [3], wherein the metal particles include metal particles (b) different from the metal particles (a), and the metal particles (b) have a particle size D50 at a cumulative volume of 50%, as measured by laser diffraction/scattering particle size distribution measurement, of 0.15 µm or less, or of 0.8 µm or greater.
[5] The joining material according to any one of [1] to [4], further including, in the solvent thereof, a resin component which is a curable resin, a non-curable resin or a thermoplastic resin, wherein a ratio of a content of the resin component to a content of the metal particles in the joining material is less than 0.01 mass%.
[6] The joining material according to any one of [1] to [4], wherein the joining material does not contain, in the solvent thereof, a resin component which is a curable resin, a non-curable resin or a thermoplastic resin.
[7] A method of producing a joined body in which a conductive first component and a conductive second component are bonded via a conductive joining portion, the method including: attaching the joining material according to any one of [1] to [6] to a first surface of the first component or a second surface of the second component; laminating the first component and the second component with the attached joining material therebetween to produce a laminate; drying the joining material in the laminate to form a dried joining material; and firing the dried joining material at a temperature higher than a temperature at which the joining material has been dried to thereby form the joining portion from the dried joining material.

### [Advantageous Effects of Invention]

The present invention provides a joining material for forming a joining portion that joins conductive components together, which can suppress generation of voids in the joining portion even when a joined body of conductive components is produced by placing a conductive component on an undried joining material disposed on another conductive component, drying the joining material, and firing the dried joining material to form a joining portion.

### [Brief Description of Drawings]

Fig. 1 is a cross-sectional view schematically illustrating an example of a joined body to which a production method according to an embodiment of the present invention is applied.
Fig. 2A is a cross-sectional view schematically illustrating an example of a method of producing a joined body according to an embodiment of the present invention, and illustrates an attaching step.
Fig. 2B is a diagram for illustrating a laminating step subsequent to the step of Fig. 2A.
Fig. 2C is a diagram for illustrating a drying step subsequent to the step of Fig. 2B.
Fig. 2D is a diagram for illustrating a firing step subsequent to the step of Fig. 2C.
Fig. 2E is a diagram for illustrating a joined body after the step of Fig. 2D.
Fig. 3A is a cross-sectional view schematically illustrating another example of a method of producing a joined body according to an embodiment of the present invention, and illustrates an attaching step.
Fig. 3B is a diagram for illustrating a laminating step subsequent to the step of Fig. 3A.
Fig. 3C is a diagram for illustrating a drying step subsequent to the step of Fig. 3B.
Fig. 3D is a diagram for illustrating a firing step subsequent to the step of Fig. 3C.
Fig. 3E is a diagram for illustrating a joined body after the step of Fig. 3D.

### [Description of Embodiments]

### ◊ Joining Material

A joining material according to an embodiment of the present invention is a joining material for joining conductive components together, the joining material including: metal particles containing metal particles (a); and a solvent for dispersing the metal particles, wherein the joining material has a viscosity, as measured according to JIS Z 3285:2017, of 70 Pa·s or greater, and the metal particles (a) have a particle size at a cumulative volume of 50% (hereinafter simply referred to as "D50"), as measured by laser diffraction/scattering particle size distribution measurement, of greater than 0.15 µm and less than 0.8 µm.

Since the joining material of the present embodiment is in a paste form, contains the metal particles (a) having D50 within a specific range as the main component, and has a viscosity within a specific range, even when a joined body of conductive components is produced by placing a conductive component on an undried joining material disposed on another conductive component, drying the joining material, and firing the dried joining material to form a joining portion, it is possible to suppress generation of voids in the joining portion. The reason for this is that, as described above, when the conductive component is placed on the undried joining material, generation of voids between the joining material and the conductive components is suppressed. Suppressing the generation of voids in the joining portion increases the electrical conductivity at the joining portion and the strength of the joining portion.

### ⊚ Viscosity

The joining material has a viscosity, as measured according to JIS Z 3285:2017, of 70 Pa·s or greater, and the viscosity may preferably be 90 Pa·s or greater, more preferably 120 Pa·s or greater, and even more preferably 145 Pa·s or greater. When the viscosity is greater than or equal to the lower limit, the effect of suppressing generation of voids in the joining portion is further enhanced.

Further, the viscosity is preferably 180 Pa·s or less. When the viscosity is less than or equal to the upper limit, the fluidity of the joining material is further improved, and the joining material can be more easily handled.

In one embodiment, the viscosity may be, for example, 70 Pa·s to 180 Pa·s, preferably 90 Pa·s to 180Pa·s, more preferably 120 Pa·s to 180Pa·s, and even more preferably 145 Pa·s to 180Pa·s. However, these are merely examples of the viscosity.

The term "viscosity of the joining material" as used herein means the viscosity of the joining material as measured according to JIS Z 3285:2017 described above.

### ⊚ Thixotropic Index

The joining material preferably has a thixotropic index, as measured according to JIS Z 3285:2017 separately from the measurement of the viscosity, of 0.55 to 0.95. When the viscosity and the thixotropic index of the joining material are within the above ranges, the joining material has more preferred properties. Accordingly, it is presumed that, immediately after the conductive component is placed on the undried joining material, the viscosity of the joining material decreases due to the stress applied to the joining material, making it easier for air bubbles generated between the undried joining material and the conductive component to escape therefrom. Further, it is presumed that, after a certain period of time has elapsed since the conductive component is placed on the undried joining material, the viscosity of the joining material increases, making it easier to maintain a state in which air bubbles escape from between the undried joining material and the conductive components. This is presumed to further suppress the generation of voids between the undried joining material and the conductive components, and ultimately further suppress the generation of voids in the joining portion.

The viscosity of the joining material can be adjusted, for example, by adjusting the types of the metal particles containing the metal particles (a) and the solvent, and the contents of the metal particles containing the metal particles (a) and the solvent.

In particular, the viscosity of the joining material can be easily adjusted by adjusting D50 of the metal particles (a), and D10 and D90 described later. This is considered to be because the degree of aggregation of the metal particles affects the viscosity of the joining material.

The following description will be given of a joining material according to the present embodiment. In the joining material, the ratio of the total content of one or more components contained in the joining material, which will be described later, to the total mass of the joining material does not exceed 100 mass%.

### <<Metal Particles>>

In the present embodiment, the metal particles contained in the joining material include at least metal particles (a). Although details will be described later, the metal particles may further include metal particles (b).

The shape of the metal particles (a) is not particularly limited, but is preferably substantially spherical.

In this specification, the term "substantially spherical" means a spherical shape or a shape that can be regarded as a spherical shape, not limited to the case of the metal particles (a), and more specifically, means a particle shape whose aspect ratio obtained by [major axis of particle] / [minor axis of particle] is 2 or less. The aspect ratio is preferably 1.6 or less, and more preferably 1.3 or less. The surface of substantially spherical particles may be composed of only a curved surface, or may include a flat surface, or may include a corner formed by two flat surfaces connected to each other at a predetermined angle. The surface of substantially spherical particles may be smooth or may have asperities.

The metal particles (a) used may be any commercially available spherical or substantially spherical particles as long as they satisfy the above condition of D50.

Preferably, the metal particles (a) may be of a metal species having high thermal conductivity and a high melting point.

For example, the thermal conductivity of the metal species of the metal particles (a) (e.g., bulk thermal conductivity) may preferably be 350 W/mK or greater, and more preferably 350 W/mK to 450 W/mK. This allows heat to be quickly released, for example, even when the temperature due to heat generated by a semiconductor or the like that is in contact with the joining material is high (e.g., 150°C or higher).

For example, the melting point of the metal species of the metal particles (a) may preferably be 900°C or higher, and more preferably 900°C to 1100°C.

The metal species of the metal particles (a) contained in the joining material may be only one type or two or more types, and when two or more types are contained, the combination and ratio of these can be arbitrarily selected.

Among these, the metal species of the metal particles (a) is preferably silver or copper, and more preferably silver. That is, the metal particles (a) are preferably silver particles or copper particles, and more preferably silver particles. The metal species of the metal particles (a) is not limited to pure silver or pure copper, and may be a silver alloy or a copper alloy.

Examples of the silver particles in the metal particles (a) include silver particles obtained by a reduction method and silver particles obtained by an atomization method.

The silver particles may be a surface-treated product whose surface has been chemically treated (treated with a chemical substance), or may be a surface-untreated product whose surface has not been chemically treated.

In general, silver particles obtained by a reduction method are surface-treated products, and silver particles obtained by an atomization method are surface-untreated products.

### <Particle Size Distribution of Metal Particles>

In the present embodiment, the particle size distribution of the metal particles was measured by laser diffraction/scattering particle size distribution measurement.

Hereinafter, the minimum particle size of the metal particles as measured by laser diffraction/scattering particle size distribution measurement is referred to as "Dmin", the particle size of the metal particles at a cumulative volume of 10% is referred to as "D10", the particle size of the metal particles at a cumulative volume of 50% is referred to as "D50", the particle size of the metal particles at a cumulative volume of 90% is referred to as "D90", and the maximum particle size of the metal particles is referred to as "Dmax".

D50 of the metal particles (a) is greater than 0.15 µm and less than 0.8 µm, preferably 0.2 µm to 0.7 µm, and may be, for example, any one of 0.2 µm to 0.5 µm, 0.2 µm to 0.45 µm and 0.2 µm to 0.37 µm, or may be any one of 0.3 µm to 0.7 µm, 0.38 µm to 0.7 µm and 0.45 µm to 0.7 µm, or may be either of 0.3 µm to 0.5 µm and 0.38 µm to 0.45 µm. When D50 is within the above range, the effect of suppressing generation of voids in the joining portion is further enhanced.

D90 of the metal particles (a) is not particularly limited, but is preferably less than 1.2 µm, more preferably 1.08 µm or less, even more preferably 1.0 µm or less, and still even more preferably 0.9 µm or less. When D90 is within the above range, the viscosity of the joining material can be more easily adjusted.

Further, D90 is preferably 0.45 µm or greater. Such metal particles (a) are easier to prepare and readily available. For example, particles having D50 of a predetermined size and D90 smaller than 0.45 µm (that is, particles having a narrow grain size distribution) may be difficult to produce.

In one embodiment, D90 may be, for example, 0.45 µm or greater and less than 1.1 µm, preferably 0.45 µm to 1.08 µm, more preferably 0.45 µm to 1.0 µm, and even preferably 0.45 µm to 0.9 µm.However, these are merely examples of D90.

D10 of the metal particles (a) is not particularly limited, but is preferably 0.06 µm or greater, more preferably 0.12 µm or greater, and even more preferably 0.18 µm or greater. When D10 is within the above range, the viscosity of the joining material can be more easily adjusted.

Further, D10 is preferably 0.34 µm or less. Such metal particles (a) are easier to prepare and readily available. This is because, as described above, particles having a narrow grain size distribution may be difficult to produce.

In one embodiment, D10 may be, for example, 0.06 µm to 0.34 µm, preferably 0.12 µm to 0.34 µm, and more preferably 0.18 µm to 0.34 µm. However, these are merely examples of D10.

In the joining material, the ratio of the content of the metal particles (a) to the total mass of the joining material ([content of the metal particles (a) in the joining material (parts by mass)] / [total mass of the joining material (parts by mass)] × 100) is preferably 88.5 mass% to 95 mass%, more preferably 90 mass% to 95 mass%, even more preferably 88.5 mass% to 93 mass%, and still even more preferably 90 mass% to 93 mass%. When the ratio is greater than or equal to the lower limit, the joining portion can be formed more efficiently, and the effect of suppressing generation of voids in the joining portion is further enhanced. When the ratio is smaller than or equal to the upper limit, the fluidity of the joining material is further improved, and the joining material can be more easily handled.

### <<Solvent>>

Since the joining material contains a solvent, it is fluid and easy to handle.

The joining material is typically in a paste or liquid form.

The term "solvent" as used herein is a concept that encompasses components that are liquid at room temperature and dissolve solutes, and components that are liquid at room temperature and function as dispersing media for dispersing dispersoids, unless otherwise specified.

The term "room temperature" as used herein refers to a temperature that is not particularly cooled or heated, that is, a normal temperature, examples of which are 15°C to 25°C.

The solvent is not particularly limited as long as it can be removed (vaporized) under heating conditions, and is preferably a solvent having no reactivity with components other than the solvent, such as the metal particles (a) in the joining material.

Examples of the solvent include aromatic hydrocarbons such as toluene, o-xylene, m-xylene and p-xylene; aromatic hydrocarbons such as pentane, hexane, cyclohexane, heptane, octane, cyclooctane, nonane, decane, undecane, dodecane, tridecane, tetradecane, pentadecane and decahydronaphthalene; halogenated hydrocarbons such as dichloromethane and chloroform; alcohols such as hexanol (e.g., 1-hexanol), heptanol (e.g., 1-heptanol), octanol (e.g., 1-octanol), nonanol (e.g., 1-nonanol), decanol (e.g., 1-decanol), benzyl alcohol, cyclohexanol and terpineol; esters such as ethyl acetate, monomethyl glutarate and dimethyl glutarate; ethers such as diethylether, tetrahydrofuran (THF) and 1,2-dimethoxyethane (dimethyl cellosolve); alcohol ethers (compounds having both a hydroxyl group and an ether bond in one molecule) such as propylene glycol monomethyl ether (also known as: 1-methoxy-2-propanol), 3-methoxy-3-methyl-1-butanol and butylcarbitol (also known as: diethylene glycol monobutyl ether); ketones such as acetone, methyl ethyl ketone (MEK) and cyclohexanone; hydroxyketones such as diacetone alcohol (also known as: 4-hydroxy-4-methyl-2-pentanone); enones such as isophorone (also known as: 3,5,5-trimethylcyclohexa-2-en-1-one); nitriles such as acetonitrile; amides such as N,N-dimethylformamide (DMF) and N,N-dimethylacetamide; and alcohol esters (compounds having both a hydroxyl group and an ester bond in one molecule) such as Texanol (2,2,4-trimethyl-1,3-pentanediol monoisobutyrate).

The solvent contained in the joining material may be only one type or two or more types, and when two or more types are contained, the combination and ratio of these can be arbitrarily selected.

In the joining material, the ratio of the content of the solvent to the total mass of the joining material ([content of the solvent in the joining material (parts by mass)] / [total mass of the joining material (parts by mass)] × 100) is preferably 5 mass% to 11.5 mass%, and may be, for example, any one of 5 mass% to 10 mass%, 7 mass% to 11.5 mass%, and 7 mass% to 10 mass%. When the ratio is greater than or equal to the lower limit, the viscosity of the joining material is further reduced, and the joining material can be more easily handled. When the ratio is less than or equal to the upper limit, the content of the metal particles (a) in the joining material can be increased, the joining portion can be formed more efficiently, and the effect of suppressing generation of voids in the joining portion is further enhanced.

### <<Other Components>>

The joining material may or may not contain other components that do not correspond to either the metal particles (a) or the solvent, as long as the effects of the present invention are not impaired.

The other components are not particularly limited as long as the effects of the present invention are not impaired, and can be arbitrarily selected according to the purpose.

The other components contained in the joining material may be only one type or two or more types, and when two or more types are contained, the combination and ratio of these can be arbitrarily selected.

Examples of the other components contained in the joining material include metal particles (b) other than the metal particles (a), and resin components. That is, the joining material may further contain either or both of the metal particles (b) and a resin component.

### <Metal Particles (b)>

The metal particles (b) are metal particles different from the metal particles (a). In the present embodiment, the metal particles (a) and the metal particles (b) being different from each other means, for example, that the metal species, particle size distribution or shape of the particles of the two types of metal particles are different from each other.

For example, when the metal species of the metal particles (a) is silver, the metal species of the metal particles (b) may be a metal species other than silver (e.g., copper). When the metal particles (a) have a substantially spherical shape, the metal particles (b) may have a shape other than a substantially spherical shape (for example, a plate shape).

The two types of metal particles having different particle size distributions from each other include cases where D50 values are different from each other and where the spread of the particle size distribution is different from each other. When D50 values are different from each other, the particle size distribution of a mixture obtained by mixing two types of particles has two peaks of grain size. Further, even when D50 values of two types of particles are equal to each other, the case where the spread of the particle size distribution of the two types of metal particles is different from each other is also included in the "case where the grain size distributions of the metal particles (a) and the metal particles (b) are different from each other". The two types of metal particles having different spread of the particle size distribution means, for example, that at least one of Dmin, D10, D90 and Dmax is different from each other. That is, it refers to the case where the spread of the particle size distribution when two types of particles are mixed is different from the spread of the tail of the particle size distribution of only one type.

The metal particles (b) are not particularly limited as long as the above conditions are satisfied.

Examples of the metal species of the metal particles (b) include the same metal species as those of the metal particles (a).

Examples of the shape of the metal particles (b) include a substantially spherical shape and a plate shape.

The metal particles (b) may be, for example, metal particles having a D50 value of 0.15 µm or less or a D50 value of 0.8 or greater.

The term "plate shape" for the metal particles as used herein refers to a shape having two major surfaces of a substantially polygonal shape such as a substantially triangular shape (triangular shape or a shape that can be regarded as a triangular shape), a substantially pentagonal shape (pentagonal shape or a shape that can be regarded as a pentagonal shape) or a substantially hexagonal shape (hexagonal shape or a shape that can be regarded as a hexagonal shape), or an irregular shape in which some of the sides or corners of a substantially polygonal shape can be regarded as being notched.

The thickness of the plate (that is, the width between the two major surfaces, i.e., the thickness of the plate in the direction perpendicular to the major surfaces) is 40 nm or less, and the maximum length of the two major surfaces (in other words, the particle size) is 10 nm to 1000 nm.

The aspect ratio of the plate shaped metal particles (= [maximum length of major surface (particle size)] / [width between major surfaces]) is 3 or greater.

The metal species of the metal particles (b) contained in the joining material may be only one type or two or more types, and when two or more types are contained, the combination and ratio of these can be arbitrarily selected.

The metal species of the metal particles (b) is preferably silver or copper, and more preferably silver. The metal species of the metal particles (b) is not limited to pure silver or pure copper, and may be a silver alloy or a copper alloy.

It is preferred that both the metal particles (a) and the metal particles (b) contained in the joining material are silver particles.

In the joining material, the ratio of the content of the metal particles (b) to the total mass of the joining material ([content of the metal particles (b) in the joining material (parts by mass)] / [total mass of the joining material (parts by mass)] × 100) is preferably 1 mass% or less, more preferably 0.5 mass% or less, even more preferably 0.3 mass% or less, and still even more preferably 0.1 mass% or less. When the ratio is smaller than or equal to the upper limit, the effects obtained by using the metal particles (a) are further enhanced.

When the particle size of the metal particles on a volume basis is measured by laser diffraction/scattering particle size distribution measurement for the joining material, the presence of the metal particles (b) can be confirmed if multiple peaks in the grain size distribution are observed. If the difference between D50 of the metal particles (b) and D50 of the metal particles (a) is relatively large, multiple peaks can be easily observed.

When observing a joining material with an SEM or the like, the presence of the metal particles (b) can be confirmed if metal particles having a shape other than a substantially spherical shape, such as a plate shape, are observed.

### <Resin Component>

The resin component can be arbitrarily selected according to the purpose, and is not particularly limited.

The resin component may be, for example, either a curable resin or a non-curable resin, or may be a thermoplastic resin. The resin component may be dissolved in a solvent, or may be dispersed in a solvent. The resin component may be a binder that contributes to bonding between the metal particles or between the joining material and the adherend, or may be spacer particles that are dispersed in a solvent and serve as spacers between the metal particles.

It should be noted that a resin provided on the surface of the metal particles for chemical treatment of the surface of the metal particles is not included in the definition of the resin component in the present embodiment.

Further, the joining material of the present embodiment may not necessarily contain a resin component (for example, a binder or spacer particle). A smaller content of the resin component is preferred, and in the joining material, the ratio of the content of the resin component to the total content of the metal particles ([content of the resin component in the joining material (parts by mass)] / [total content of the metal particles in the joining material (parts by mass)] × 100) is preferably less than 0.01 mass%, and more preferably 0.005 mass% or less. When the resin component is contained in an amount of less than 0.01 mass%, the resin component may be able to reduce the porosity of the joining material or suppress the occurrence of cracking. However, if the resin component remains in the fired joining material, the remaining resin component may increase the porosity. Therefore, it is preferred that the ratio of the content of the resin component in the joining material is less than 0.01 mass% or the resin component contains no resin component.

Therefore, it can be said that the ratio of the content of the resin component is preferably 0 mass% or greater and less than 0.01 mass%.

When the ratio is less than 0.01 mass% or no resin component is contained, the effect of suppressing generation of voids is further enhanced.

The resin component contained in the joining material only one type or two or more types, and when two or more types are contained, the combination and ratio of these can be arbitrarily selected.

When the metal particles include the metal particles (a) and the metal particles (b) in the joining material, the ratio of the content of the resin component to the total content of the metal particles (a) and the metal particles (b) is [content of the resin component in the joining material (parts by mass)] / [total content of the metal particles (a) and the metal particles (b) in the joining material (parts by mass)] × 100. In this case also, the ratio of the content of the resin component may be less than 0.01 mass%, and preferably 0.005 mass% or less.

When the joining material contains no metal particles (b), the content of the metal particles (b) in the joining material is 0 part by mass. Similarly, when the joining material contains no resin component, the content of the resin component in the joining material is 0 part by mass.

The joining material may contain, as the above-mentioned other components, a component (X) which does not correspond to the metal particles (b) or the resin component. In this case, in the joining material, the ratio of the content of the other component (X) to the total mass of the joining material ([content of the component (X) (parts by mass)] / [total mass of the joining material (parts by mass)] × 100) is preferably 5 mass% or less, more preferably 3 mass% or less, and even more preferably 1 mass% or less. When the ratio is less than or equal to the upper limit, the effect of suppressing generation of voids in the joining portion is further enhanced.

Further, the ratio of the content of the component (X) is 0 mass% or greater.

In the joining material, the ratio of the total content of the metal particles (a) and the solvent to the total mass of the joining material ([total content of the metal particles (a) and the solvent in the joining material (parts by mass)] / [total mass of the joining material (parts by mass)] × 100) is preferably 95 mass% or greater, more preferably 97 mass% or greater, and even more preferably 99 mass% or greater. When the ratio is greater than or equal to the lower limit, the effect of suppressing generation of voids in the joining portion is further enhanced.

Further, the ratio of the total content of the metal particles (a) and the solvent to the total mass of the joining material is 100 mass% or less.

As described above, a joining material according to the present embodiment includes: metal particles containing metal particles (a); and a solvent for dispersing the metal particles, wherein the joining material has a viscosity, as measured according to JIS Z 3285:2017, of 70 Pa·s or greater, and the metal particles (a) have a particle size D50 at a cumulative volume of 50%, as measured by laser diffraction/scattering particle size distribution measurement, of greater than 0.15 µm and less than 0.8 µm. With this configuration, since the viscosity of the joining material is 70 Pa·s or greater and D50 is greater than 0.15 µm and less than 0.8 µm, it is possible to suppress generation of voids in the joining portion.

The joining material has a thixotropic index, as measured according to JIS Z 3285:2017, in a range of 0.55 to 0.95.

Accordingly, it is presumed that, immediately after the conductive component is placed on the undried joining material, the viscosity of the joining material decreases due to the stress applied to the joining material, making it easier for air bubbles generated between the undried joining material and the conductive component to escape therefrom.

The metal particles include metal particles (b) different from the metal particles (a), and the metal particles (b) have a particle size D50 at a cumulative volume of 50%, as measured by laser diffraction/scattering particle size distribution measurement, of 0.15 µm or less, or of 0.8 µm or greater.

The joining material further includes, in the solvent thereof, a resin component which is a curable resin, a non-curable resin or a thermoplastic resin, wherein a ratio of a content of the resin component to a content of the metal particles in the joining material is less than 0.01 mass%. Alternatively, the joining material may not contain, in the solvent thereof, a resin component which is a curable resin, a non-curable resin or a thermoplastic resin.

This makes it possible to reduce the porosity of the joining material and suppress the occurrence of cracking and voids.

### <<Method of Producing Joining Material>>

The joining material of the present embodiment can be obtained by blending the metal particles (a), a solvent, and if necessary, the above-mentioned other components.

After the components are blended, the resulting mixture may be used as it is as a joining material, or may be used as a joining material after known post-treatment or purification processes if necessary.

The blending order of the components is not particularly limited.

The method of mixing the compound is not particularly limited, and may be appropriately selected from known methods, such as mixing by rotating a stirrer, an agitating blade, or the like; mixing with a mixer, a three-roll mill, a kneader, a bead mill, or the like; and mixing by applying ultrasonic waves.

The temperature at which each component is blended is not particularly limited as long as each component does not deteriorate, but may preferably be 0°C to 40°C.

The blending time of each component is not particularly limited as long as each component does not deteriorate, but may preferably be 10 minutes to 12 hours.

### ◊ Method of Producing Joined Body

A method of producing a joined body according to an embodiment of the present invention is a method of producing a joined body in which a first conductive component (hereinafter simply referred to as a "first component") and a conductive second component (hereinafter simply referred to as a "second component") are bonded via a conductive joining portion (hereinafter simply referred to as a "joining portion"), the method including:
attaching a joining material according to an embodiment to a first surface of the first component or a second surface of the second component (hereinafter simply referred to as an "attaching step");
laminating the first component and the second component with the attached joining material therebetween to produce a laminate (hereinafter simply referred to as a "laminating step"); and
drying the joining material in the laminate to form a dried joining material (hereinafter simply referred to as a "drying step");
firing the dried joining material at a temperature higher than a temperature at which the joining material has been dried to thereby form the joining portion from the dried joining material (hereinafter simply referred to as a "firing step").

The conductive components such as the first component and the second component are not particularly limited as long as they have conductivity. Examples of the conductive components include metal components (metal members). Examples of the metal components include a metal layer provided by sputtering or plating on the surface of a semiconductor chip such as a silicon chip or a semiconductor element, or may be a metal layer such as an electrode provided on a resin substrate or a ceramic substrate.

The joining portion is formed using the joining material according to the embodiment described above, and is a metal sintered body.

For example, when the joining material contains silver particles as the metal particles (a), the metal sintered body is a silver sintered body, and when the joining material contains copper particles as the metal particles (a), the metal sintered body is a copper sintered body.

The joining portion has electrical conductivity and thermal conductivity, and is a useful alternative to solder.

In the production method, each step can be performed under atmospheric conditions.

If the constituent material of either or both of the first component and the second component to be joined is a metal that is easily oxidized (e.g., copper or the like), each step in the production method may be performed in an inert gas atmosphere. Examples of the inert gas include nitrogen gas and helium gas.

With reference to the drawings, a method of producing a joined body of the present embodiment will be described.

First, a joined body to which the production method of the present embodiment is applied will be described.

### <<Joined Body>>

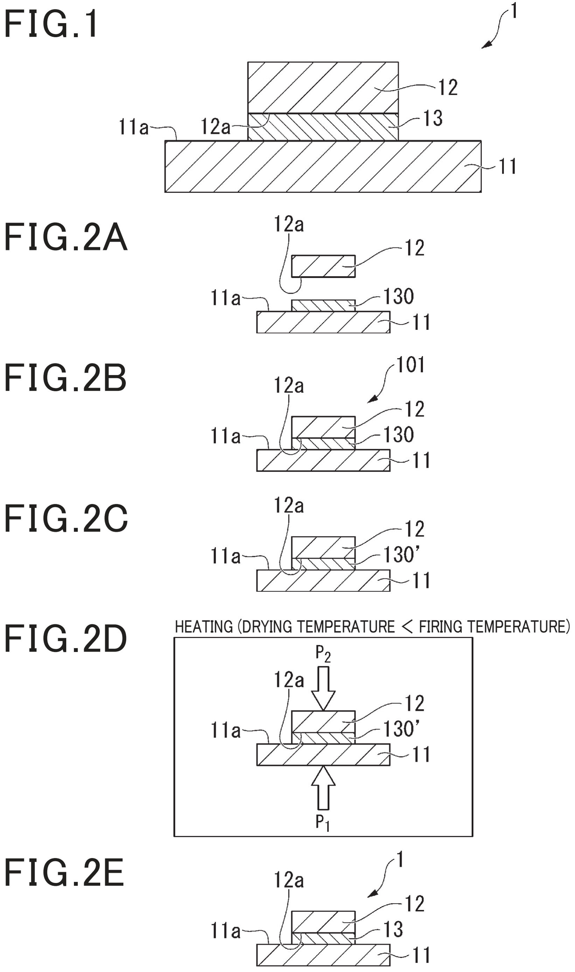

Fig. 1 is a cross-sectional view schematically illustrating an example of the joined body.

A joined body 1 shown in this example has a configuration in which a conductive first component 11 and a conductive second component 12 are bonded via a conductive joining portion 13.

A first surface 11a of the first component 11 is in contact with the joining portion 13.

A second surface 12a of the second component 12 is in contact with the joining portion 13.

The joined body 1 is formed of the first component 11, the joining portion 13 and the second component 12 laminated in this order in the thickness direction. Hereinafter, the direction in which the first component 11, the joining portion 13 and the second component 12 are laminated is referred to as a thickness direction.

The area of the first surface 11a of the first component 11 is preferably greater than or equal to that of the second surface 12a of the second component 12.

The first component 11 may have a sheet, plate or block shape.

The first component 11 preferably contains a metal, and is more preferably made of a metal.

Examples of the metal constituting the first component 11 include silver, copper, aluminum, gold, nickel, and the like.

The first component 11 may be formed of one layer (single layer), or may be formed of two or more layers. When the first component 11 is formed of multiple layers, these multiple layers may be the same or different from each other, and the combination of these multiple layers is not particularly limited.

In this specification, not limited to the case of the first component, the "multiple layers may be the same or different from each other" means that "all the layers may be the same or different from each other, or only some of the layers may be the same", and the "multiple layers may be different from each other" means that "the layers are different in at least one of the constituent material and the thickness".

When the first component 11 is formed of multiple layers, one layer or two or more layers of the first component 11 on the joining portion 13 side, for example, may be layers that improve adhesion to the joining portion 13.

The thickness of the first component 11 can be arbitrarily set according to the purpose of the joined body 1, and is not particularly limited.

The thickness of the first component 11 may be, for example, 10 µm to 10,000 µm.

When the first component 11 is formed of multiple layers, the total thickness of the layers is preferably the thickness of the first component 11.

Although the first component 11 is described as having a sheet, plate or block shape, the first component 11 may have any other shape than these shapes, and the shape of the first component 11 can be arbitrarily selected according to the purpose.

The second component 12 may have a sheet, plate or block shape.

The second component 12 preferably contains a metal, and is more preferably made of a metal, and examples of the metal constituting the second component 12 include the same metals as those constituting the first component 11.

The second component 12 may be formed of one layer (single layer), or may be formed of two or more layers. When the second component 12 is formed of multiple layers, these multiple layers may be the same or different from each other, and the combination of these multiple layers is not particularly limited.

When the second component 12 is formed of multiple layers, one layer or two or more layers of the second component 12 on the joining portion 13 side, for example, may be layers that improve adhesion to the joining portion 13.

The thickness of the second component 12 can be arbitrarily set according to the purpose of the joined body 1, and is not particularly limited. The thickness of the second component 12 is preferably 0.05 µm to 10,000 µm, and may be, for example, 0.05 µm to 500 µm, or greater than 500 µm and 10,000 µm or less.

When the second component 12 is formed of multiple layers, the total thickness of the layers is preferably the thickness of the second component 12.

Although the second component 12 is described as having a sheet, plate or block shape, the second component 12 may have any other shape than these shapes, and the shape of the second component 12 can be arbitrarily selected according to the purpose.

The joining portion 13 may have a sheet, plate or block shape.

The joining portion 13 may be formed of one layer (single layer), or may be formed of two or more layers. When the joining portion 13 is formed of multiple layers, these multiple layers may be the same or different from each other, and the combination of these multiple layers is not particularly limited.

The entire surface of the joining portion 13 on the first component 11 side is preferably in contact with the first surface 11a of the first component 11.

The joining portion 13 may have a thickness of, for example, 10 µm or greater and 400 µm or less. The thickness may preferably be, 100 µm or greater, more preferably 200 µm or greater, and even more preferably 300 µm or greater. The greater the thickness of the joining portion 13, the higher the strength of the joining portion 13.

Further, the thickness of the joining portion 13 is preferably 400 µm or less. When the thickness of the joining portion 13 is 400 µm or less, the joining portion 13 can be formed more easily.

Although the joining portion 13 is described as having a sheet, plate or block shape, the joining portion 13 may have any other shape than these shapes, and the shape of the joining portion 13 can be arbitrarily selected according to the purpose.

The area of the contact region between the surface of the joining portion 13 and the first component 11 (more specifically, the first surface 11a) and the area of the contact region between the surface of the joining portion 13 and the second component 12 (more specifically, the second surface 12a) may be the same or different from each other. The area of each contact region is preferably 9 mm² to 2,500 mm², and more preferably 9 mm² to 1,225 mm², and may be, for example, either of 9 mm² to 576mm² and 9 mm² to 144 mm², or may be either of 225 mm² to 1,225 mm² and 625 mm² to 1,225 mm², or may be 225 mm² to 576 mm². However, these are merely examples of the area of the contact regions. When the area of the contact regions is within the above range, the joining strength and heat dissipation between the components 11 and 12 and the joining portion 13.

The area of the second surface 12a of the second component 12 is preferably 50% to 150% of the surface of the joining portion 13 on the second component 12 side.

The area of the contact region between the second surface 12a of the second component 12 and the joining portion 13 is preferably 50% to 100% of the area of the entire surface of the second surface 12a.

The joining portion 13 is preferably in contact with the first component 11 on the entire surface on the first component 11 side.

In the joined body 1, one first component 11 and one second component 12 are bonded via one joining portion 13, but the joining form is not limited thereto.

For example, in the joined body, one first component and two or more second components may be bonded via one joining portion. In this case, the two or more second components may be all the same or all different, or only some of them may be different.

Further, in the joined body, for example, one first component and two or more second components may be bonded via two or more joining portions. In this case, the number of the second components and the number of the joining portions may be the same or different. Further, the two or more second components may be all the same or all different, or only some of them may be different.

The number of the first components and the number of the second components exemplified here may be reversed.

The joined body to which the production method of the present embodiment is applied is not limited to that shown in Fig. 1, and for example, some of the components of the joined body 1 shown in Fig. 1 may be modified, removed or added without departing from the gist of the present invention.

Next, a production method of the present embodiment will be described by using an example of the case of producing the joined body shown in Fig. 1.

### ⊚ Production Method (1)

Figs. 2A to 2E are cross-sectional views schematically illustrating an example method of producing a joined body of the present embodiment (hereinafter simply referred to as a "production method (1)".

In each of the drawings, the same components as those shown in the drawings already described are denoted by the same reference signs as those in the drawings already described, and detailed description thereof will be omitted.

### <<Attaching Step>>

As shown in Fig. 2A, in the attaching step of the production method (1), the joining material 130 is attached to the first surface 11a of the first component 11.

Examples of the method of attaching the joining material 130 to the first component 11 include known methods such as printing and coating.

Examples of the printing method include screen printing, flexographic printing, offset printing, dip printing, ink jet printing, dispenser printing, jet dispenser printing, gravure printing, gravure offset printing, pad printing, and the like.

Examples of the coating method include methods using various coaters such as a spin coater, an air knife coater, a curtain coater, a die coater, a blade coater, a roll coater, a gate roll coater, a bar coater, a rod coater and a gravure coater; methods using a wire bar; and methods using a coating device such as a slot die.

In attachment of the joining material 130 to the first component 11, a mask such as a metal mask plate may be used to attach the joining material 130 only to desired locations.

### <<Laminating Step>>

As shown in Fig. 2B, in the laminating step subsequent to the attaching step of the production method (1), the first component 11 and the second component 12 are laminated with the attached joining material 130 therebetween to produce a laminate 101. That is, the laminate 101 is formed of the first component 11, the joining material 130 and the second component 12 laminated in this order in the thickness direction.

The first component 11 is in contact with the joining material 130 on the first surface 11a.

The second component 12 is in contact with the joining material 130 on the second surface 12a.

In the laminating step, when the second component 12 is placed on the undried joining material 130, generation of voids between the joining material 130 and the second component 12 is suppressed.

In production of the laminate 101, for example, the laminate 101 may be produced by providing the second component 12 above the exposed surface of the joining material 130 (that is, the surface on a side opposite to that in contact with the first component 11) at a position spaced apart from the exposed surface, and dropping the second component 12 from this position to thereby place the second component 12 on the joining material 130. In this specification, a method of laminating the first component 11, the joining material 130 and the second component 12 in this manner may be referred to as a "lamination method (i)".

In production of the laminate 101, for example, the laminate 101 may also be produced by lightly pressing the second component 12 against the exposed surface of the joining material 130 (that is, the surface on a side opposite to that in contact with the first component 11), then releasing the pressure of the second component 12 to thereby place the second component 12 on the joining material 130. In this specification, a method of laminating the first component 11, the joining material 130 and the second component 12 in this manner may be referred to as a "lamination method (ii)".

It is presumed that the viscosity of the joining material 130 is more likely to decrease in the initial stage of the contact between the second component 12 and the joining material 130 when the lamination method (i) is adopted than when the lamination method (ii) is adopted. Comparing the lamination method (i) and the lamination method (ii), it is presumed that the state of the joining material 130 is different in the initial stage of the contact between the second component 12 and the joining material 130, but regardless of which production method is adopted, generation of voids is suppressed in the finally formed joining portion.

### <<Drying Step>>

As shown in Fig. 2C, in the drying step subsequent to the laminating step of the production method (1), the joining material 130 in the laminate 101 is dried to form a dried joining material 130'.

The drying step volatilizes the solvent in the joining material 130, so that the solvent is not present in the dried joining material 130' or the solvent content is significantly lower than in the joining material 130.

The dried joining material 130' is not a metal sintered body and typically does not have the luster characteristic of metal, and can be distinguished from a desired metal sintered body by these external features.

The joining material 130 can be dried by a known method, and is preferably dried by heating under normal pressure.

The heating temperature (drying temperature) of the joining material 130 in the drying step can be appropriately adjusted according to the type of solvent, and is preferably 70°C or higher, and more preferably 100°C or higher. The heating temperature of higher than or equal to the lower limit makes it possible for drying of the joining material 130 to proceed more quickly. Further, since the drying step can sufficiently volatilize the solvent, it is possible to prevent the occurrence of bumping due to residual solvent in the firing step described later and suppress the occurrence of voids.

Further, the heating temperature is preferably 130°C or less. When the heating temperature is lower than or equal to the upper limit, deterioration of the dried joining material 130' is suppressed, and the adverse effects caused by gas (volatilized solvent) when the gas escapes from inside the joining material 130 are suppressed. Further, for example, if the drying temperature is excessively high, the metal particles are necked (fused) together before the firing step, making it difficult to reduce the number of pores during pressure application, and therefore the above-mentioned heating temperature is preferred.

The heating time (drying time) of the joining material 130 in the drying step can be appropriately adjusted according to the above heating temperature, and is preferably 1 minute to 40 minutes, more preferably 3 minutes to 30 minutes, and even more preferably 5 minutes to 20 minutes. When the heating time is within the above range, a desired dried joining material 130' can be formed more efficiently.

The dried joining material 130' may have a thickness of, for example, 10 µm or greater and 400 µm or less. The thickness may preferably be, 100 µm or greater, more preferably 200 µm or greater, and even more preferably 300 µm or greater.

Further, the thickness of the dried joining material 130' is preferably 400 µm or less. When the thickness of the dried joining material 130' is 400 µm or less, the dried joining material 130' can be formed more easily.

### <<Firing Step>>

As shown in Fig. 2D, in the firing step subsequent to the drying step of the production method (1), the dried joining material 130' in the laminate 101 is fired at a temperature (hereinafter simply referred to as a "firing temperature") higher than a temperature at which the joining material 130 has been dried.

When the joining material 130 is dried by heating, the heating temperature (firing temperature) of the dried joining material 130' is set higher than the heating temperature (drying temperature) of the joining material 130.

When the dried joining material 130' is fired, the temperature rise rate of the dried joining material 130' during heating is not particularly limited, but is preferably 30°C/min to 70°C/min, and more preferably 40°C/min to 60°C/min. When the temperature rise rate is within the above range, a metal sintered body (joining portion 13) having the desired characteristics can be produced more efficiently.

The firing temperature of the dried joining material 130' (temperature at which the metal particles (a) are sintered) is preferably 180°C or higher, and more preferably 200°C or higher, even more preferably 220°C or higher, and still even more preferably 240°C or higher. When the firing temperature is lower than or equal to the lower limit, a metal sintered body (joining portion 13) with higher purity can be obtained.

Further, from the perspective of suppressing excessive heating and obtaining a metal sintered body (joining portion 13) with good characteristics, the firing temperature of the dried joining material 130' is preferably 320°C or lower, more preferably 300°C or lower, and even more preferably 280°C or lower.

The firing time of the dried joining material 130' (time for sintering the metal particles (a)) is preferably 3 minutes to 120 minutes, and may be, for example, any one of 3 minutes to 60 minutes, 50 minutes to 90 minutes, and 80 minutes to 120 minutes. When the firing time (sintering time) is within the above range, a metal sintered body having the desired characteristics can be produced more efficiently.

In the firing step, the firing temperature within the above numerical range and the firing time within the above numerical range are preferred for firing of the dried joining material 130'.

In the firing step, it is preferred to perform firing (hereinafter simply referred to as a "pressure-firing") of the dried joining material 130' while pressing the laminate 101 in the thickness direction (in other words, the lamination direction of the first component 11, the dried joining material 130' and the second component 12). This pressure-firing of the dried joining material 130' can form a joining portion having few pores.

When the laminate 101 is pressed in the thickness direction (in other words, the lamination direction of the first component 11, the dried joining material 130' and the second component 12), the pressure applied to the laminate 101 may be either or both of a pressure P₁ applied from the first component 11 side and the pressure P₂ applied from the second component 12 side, as shown in Fig. 2D.

The term "pressure application" as used herein means increasing the pressure applied to an object by actively applying force to the object, and for example, simply supporting an object (simply exerting normal force) without actively applying force is not considered to be pressure application. In pressure application, for example, the position of the means of applying pressure changes by itself, with acceleration.

During pressure-firing, heating for firing the dried joining material 130' (laminate 101) and pressing the dried joining material 130' (laminate 101) may be started simultaneously, or pressing the dried joining material 130' may be started after the start of heating for firing the dried joining material 130', or heating for firing the dried joining material 130' may be started after the start of pressing the dried joining material 130'.

The pressure applied to the dried joining material 130' during pressure-firing is preferably 20 MPa or less, and more preferably 16 MPa or less. A pressure less than or equal to the upper limit can further suppress damage such as cracking and deformation of the first component 11 and the second component 12.

Further, from the perspective of effectively obtaining the effect of pressure application, such as fewer pores in the joining portion, the pressure during pressure-firing is preferably 1 MPa or greater.

Here, the pressure at which the dried joining material 130' is pressed (pressure during pressure-firing) is the load applied to the laminate 101 during pressing, divided by the area of the region of the dried joining material 130' receiving the load. When both the pressure P₁ applied from the first component 11 side and the pressure P₂ applied from the second component 12 side are applied to the joining material 130', the pressure per unit area during pressure-firing is (pressure P₁/area of the first surface 11a receiving the pressure P₁ + pressure P₂/area of the second surface 12a receiving the pressure P₂).

As a result of the firing step, the joining portion 13 is formed from the dried joining material 130' to thereby obtain the desired joined body 1, as shown in Fig. 2E. The joining portion 13 is a metal sintered body formed from the joining material 130 through the dried joining material 130'.

Due to the use of the joining material 130, generation of voids in the joining portion 13 is suppressed. As a result, the joining portion 13 has high electrical conductivity and strength.

In the method of producing the joined body (production method (1)) described above, the joining material is attached to the first surface of the first component, and the joining portion is formed from the joining material. However, the production method of the present embodiment may also be a method of producing the joined body (hereinafter simply referred to as a "production method (2)") in which the joining material is attached to the second surface of the second component, and the joining portion is formed from the joining material.

⊚ Production Method (2)

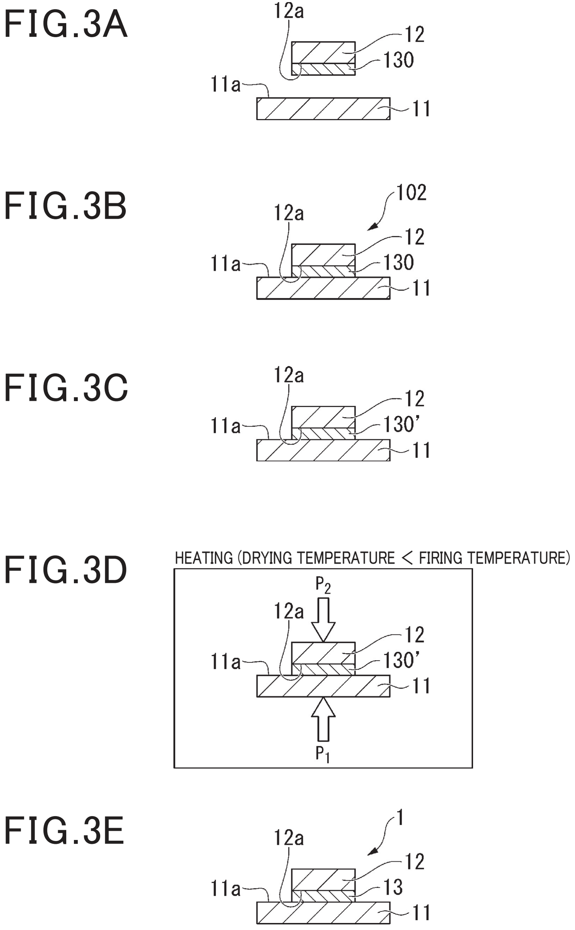

Figs. 3A to 3E are cross-sectional views schematically illustrating another example of the method of producing the joined body of the present embodiment, that is, the production method (2).

### <<Attaching Step>>

As shown in Fig. 3A, in the attaching step of the production method (2), the joining material 130 is attached to the second surface 12a of the second component 12.

The attaching step in the production method (2) can be performed in the same manner as in the attaching step of the production method (1), except that the joining material 130 is attached to the second surface 12a of the second component 12 instead of the first surface 11a of the first component 11.

### <<Laminating Step>>

As shown in Fig. 3B, in the laminating step subsequent to the attaching step of the production method (2), the first component 11 and the second component 12 are laminated with the attached joining material 130 therebetween to produce a laminate 102. That is, the laminate 102 is formed of the first component 11, the joining material 130 and the second component 12 laminated in this order in the thickness direction.

The first component 11 is in contact with the joining material 130 on the first surface 11a.

The second component 12 is in contact with the joining material 130 on the second surface 12a.

In the laminating step, when the first component 11 is placed on the undried joining material 130, generation of voids between the joining material 130 and the first component 11 is suppressed.

The laminate 102 is the same as the laminate 101 in the production method (1), except that very small voids may exist between the joining material 130 and the first component 11 rather than between the joining material 130 and the second component 12.

The laminating step in the production method (2) can be performed in the same manner as in the laminating step of the production method (1), except that the second component 12 having the joining material 130 is used instead of the first component 11 having the joining material, and the first component 11 not having the joining material 130 is used instead of the second component 12 not having the joining material 130.

### <<Drying Step>>

As shown in Fig. 3C, in the drying step subsequent to the laminating step of the production method (2), the joining material 130 in the laminate 101 is dried to form a dried joining material 130'.

The drying step in the production method (2) can be performed in the same manner as in the drying step in the production method (1).

The dried joining material 130' formed by the production method (2) is the same as the dried joining material 130' formed by the production method (1).

### <<Firing Step>>

As shown in Fig. 3D, in the firing step subsequent to the laminating step of the production method (2), the dried joining material 130' in the laminate 102 is fired at a temperature higher than a temperature at which the joining material 130 has been dried.

The firing step in the production method (2) can be performed in the same manner as in the firing step in the production method (1). Also in the firing step in the production method (2), the dried joining material 130' is preferably subjected to pressure-firing.

As a result of the firing step of the production method (2), the joining portion 13 is formed from the dried joining material 130' to thereby obtain the desired joined body 1, as shown in Fig. 3E. The joining portion 13 is a metal sintered body formed from the joining material 130 through the dried joining material 130'. The joined body 1 obtained by the production method (2) is the same as the joined body 1 obtained by the production method (1).

Also in the production method (2), due to the use of the joining material 130, generation of voids in the joining portion 13 is suppressed. As a result, the joining portion 13 has high electrical conductivity and strength.

### Examples

The present invention will be described in more detail below with reference to specific examples. However, the present invention is not limited in any way to the examples described below.

The metal particles (a) used in the following examples and comparative examples are all silver particles produced by a reduction method.

### [Example 1]

### <<Production of Joining Material>>

Metal particles (a)-1 (substantially spherical silver particles) (92 parts by mass) having the metal species, shape and grain size distribution shown in Table 1 and Texanol (8 parts by mass) were weighed into an agate mortar at room temperature, and kneaded for 15 minutes.

The obtained kneaded product was processed through a three-roll mill three times to obtain a desired paste-like joining material.

### <<Evaluation of Joined Material>>

The viscosity of the joining material was measured in accordance with JIS Z 3285:2017 at a temperature of 25°C and a rotation speed of 10 rpm (sheer rate 6/s) using a micro spiral viscometer ("PCU-02V" manufactured by Malcom Co., Ltd.). Further, the thixotropic index of the joining material was measured in accordance with JIS Z 3285:2017. The results are shown in Table 1.

### <<Production of Joined Body>>

A 20 mm × 20 mm, 1 mm-thick oxygen-free copper plate was prepared. A 50 µm-thick metal mask plate was placed on one surface of the oxygen-free copper plate, and a 5.8 mm × 5.8 mm rectangular shape was printed using the joining material. Thus, the joining material of a rectangular shape was attached to the surface of the oxygen-free copper plate (attaching step).

A backside-deposited silicon carbide (SiC) chip having a size of 4.8 mm × 4.8 mm and 0.35 mm thickness, in which a 50 nm-thick titanium film, a 100 nm-thick nickel film and a 100 nm-thick gold film were laminated in this order on one surface (in other words, rear surface) by sputtering, was prepared.

The backside-deposited silicon carbide chip was picked up by suction using a semiautomatic mounter ("ProtoPlace S" manufactured by LPKF Co. Ltd.), and the suction was released about 2 mm above the joining material disposed on the surface of the oxygen-free copper plate to drop the backside-deposited silicon carbide chip from this position onto the joining material to thereby place the backside-deposited silicon carbide chip on the joining material (lamination method (i)). Thus, a laminate was produced in which the oxygen-free copper plate, the joining material and the backside-deposited silicon carbide chip were laminated in this order in the thickness direction (laminating step). Here, the entire exposed surface of the gold film in the backside-deposited silicon carbide chip was brought into contact with the joining material.

Next, the laminate was heated in a hot air circulating oven at 110°C for 10 minutes to dry it by volatilizing the Texanol in the joining material to form a film-like dried joining material having a rectangular planar shape, thereby obtaining a dried laminate from the laminate (drying step).

Next, a carbon sheet ("PERMA-FOIL (registered trademark)" manufactured by Toyo Tanso Co., Ltd.) was provided as a buffer material on the surface of the silicon carbide chip in the backside-deposited silicon carbide chip in the dried laminate.

Next, the dried laminate with the carbon sheet thus obtained was pressed in the thickness direction using a servo press machine to start pressing the dried joining material at a pressure of 15 MPa, while heating was started at a temperature rise rate of approximately 50°C/min.

At this time, the dried laminate with the carbon sheet was placed between a pair of press plates in the servo press machine. The pair of press plates includes a first press plate on the backside-deposited silicon carbide chip side of the dried laminate with the carbon sheet and a second press plate on the oxygen-free copper plate side. The first press plate was fixed to the servo press machine. Then, the second press plate was moved toward the first press plate side to apply pressure to the dried laminate with the carbon sheet from the oxygen-free copper plate side while supporting the dried laminate with the carbon sheet by the first press plate. That is, the pressure application to the dried laminate with the carbon sheet was performed from the oxygen-free copper plate side.

Then, after the heating temperature (in other words, the temperature of the laminate) reached 250°C, this temperature was maintained for 5 minutes. That is, it was heated and pressed at a temperature of 250°C and a pressure of 15 MPa for 5 minutes. Thus, the dried joining material was subjected to pressure-firing to form a joining portion from the dried joining material (firing step).

Next, cooling water was introduced into the servo press machine to start cooling, and when the temperature of the laminate reached 60°C, the pressure was released.

Thus, a desired joined body was obtained. The thickness of the joining portion in the joined body was 27 µm.

### <<Evaluation of Joined Body>>

### <Evaluation of Effect of Suppressing Generation of Voids in Joining Portion>

The presence or absence of voids in the joining portion of the joined body obtained above was inspected using scanning acoustic tomography (SAT). The results are shown in Table 1.

### <<Production and Evaluation of Joining Material and Production and Evaluation of Joined Body>>

### [Example 2]

A joining material was produced and evaluated, and a joined body was produced and evaluated in the same manner as in Example 1, except that metal particles (a)-2 (substantially spherical silver particles) (92 parts by mass) shown in Table 1 were used instead of the metal particles (a)-1 (92 parts by mass). The results are shown in Table 1. The thickness of the joining portion in the joined body was 26 µm.

### [Example 3]

### <<Production and Evaluation of Joining Material>>

In this example, the joining material obtained in Example 2 was used, and a detailed description of the joining material will be omitted.

### <<Production of Joined Body>>

The joining material was attached to the surface of the oxygen-free copper plate in the same manner as in Example 1 (attaching step).

A backside-deposited silicon carbide chip identical to that used in Example 1 was prepared.

The backside-deposited silicon carbide chip was picked up by suction using a semiautomatic mounter ("ProtoPlace S" manufactured by LPKF Co. Ltd.), the chip was lightly pressed against the joining material on the surface of the oxygen-free copper plate, and then the suction was released to thereby place the backside-deposited silicon carbide chip on the joining material. Thus, a laminate was produced in which the oxygen-free copper plate, the joining material and the backside-deposited silicon carbide chip were laminated in this order in the thickness direction (laminating step). Here, the entire exposed surface of the gold film in the backside-deposited silicon carbide chip was brought into contact with the joining material. In this specification, the lamination method in which the backside-deposited silicon carbide chip is placed by lightly pressing it against the joining material may be hereinafter referred to as a "lamination method (ii)".

Thereafter, the drying step and the firing step were performed in the same manner as in Example 1, the laminate was allowed to cool, and the pressure was released to thereby obtain a desired joined body.

That is, this example was the same as Example 2, except that the method of placing the backside-deposited silicon carbide chip on the joining material was changed.

The thickness of the joining portion in the joined body was 23 µm.

### <<Evaluation of Joined Body>>

The joined body obtained above was evaluated in the same manner as in Example 1. The results are shown in Table 1.

### <<Production and Evaluation of Joining Material and Production and Evaluation of Joined Body>>

### [Example 4]

A joining material was produced and evaluated, and a joined body was produced and evaluated in the same manner as in Example 3, except that metal particles (a)-3 (substantially spherical silver particles) (92 parts by mass) shown in Table 1 were used instead of the metal particles (a)-2 (92 parts by mass). The results are shown in Table 1. The thickness of the joining portion in the joined body was 22 µm.

### [Example 5]

A joining material was produced and evaluated, and a joined body was produced and evaluated in the same manner as in Example 2, except that the blending amount of the metal particles (a)-2 was set to 91 parts by mass instead of 92 parts by mass, and the blending amount of Texanol was set to 9 parts by mass instead of 8 parts by mass, as shown in Table 2. The results are shown in Table 2. The thickness of the joining portion in the joined body was 25 µm.

### [Example 6]

A joining material was produced and evaluated, and a joined body was produced and evaluated in the same manner as in Example 1, except that metal particles (a)-4 (substantially spherical silver particles) (92 parts by mass) shown in Table 2 were used instead of the metal particles (a)-1 (92 parts by mass). The results are shown in Table 1. The thickness of the joining portion in the joined body was 28 µm.

### [Comparative Example 1]

A joining material was produced and evaluated, and a joined body was produced and evaluated in the same manner as in Example 2, except that the blending amount of the metal particles (a)-2 was set to 87 parts by mass instead of 92 parts by mass, and the blending amount of Texanol was set to 13 parts by mass instead of 8 parts by mass, as shown in Table 2. The results are shown in Table 2. The thickness of the joining portion in the joined body was 17 µm.

### [Comparative Example 2]

A joining material was produced and evaluated, and a joined body was produced and evaluated in the same manner as in Example 3, except that the blending amount of the metal particles (a)-2 was set to 87 parts by mass instead of 92 parts by mass, and the blending amount of Texanol was set to 13 parts by mass instead of 8 parts by mass, as shown in Table 2. The results are shown in Table 2. The thickness of the joining portion in the joined body was 11 µm.

### [Comparative Example 3]

A joining material was produced and evaluated, and a joined body was produced and evaluated in the same manner as in Example 2, except that the blending amount of the metal particles (a)-2 was set to 89 parts by mass instead of 92 parts by mass, the blending amount of Texanol was set to 11 parts by mass instead of 8 parts by mass, and the drying temperature was set to 80°C instead of 110°C, as shown in Table 3. The results are shown in Table 3. The thickness of the joining portion in the joined body was 22 µm.

### [Comparative Example 4]

A joining material was produced and evaluated, and a joined body was produced and evaluated in the same manner as in Example 2, except that the blending amount of the metal particles (a)-2 was set to 89 parts by mass instead of 92 parts by mass, and the blending amount of Texanol was set to 11 parts by mass instead of 8 parts by mass, as shown in Table 3. The results are shown in Table 3. The thickness of the joining portion in the joined body was 22 µm.

### [Comparative Example 5]

A joining material was produced and evaluated, and a joined body was produced and evaluated in the same manner as in Example 2, except that the blending amount of the metal particles (a)-2 was set to 90 parts by mass instead of 92 parts by mass, the blending amount of Texanol was set to 10 parts by mass instead of 8 parts by mass, and the drying temperature was set to 80°C instead of 110°C, as shown in Table 3. The results are shown in Table 3. The thickness of the joining portion in the joined body was 24 µm.

### [Comparative Example 6]

A joining material was produced and evaluated, and a joined body was produced and evaluated in the same manner as in Example 2, except that the blending amount of the metal particles (a)-2 was set to 90 parts by mass instead of 92 parts by mass, and the blending amount of Texanol was set to 10 parts by mass instead of 8 parts by mass, as shown in Table 3. The results are shown in Table 3. The thickness of the joining portion in the joined body was 21 µm.

**[Table 1]**

| | | | Example 1 | Example 2 | Example 3 | Example 4 |
|---|---|---|---|---|---|---|
| Components contained in joining material (content (mass%)) | | Metal particle | (a)-1 (92) | (a)-2 (92) | | (a)-3 (92) |
| | | Solvent | Texanol (8) | Texanol (8) | | Texanol (8) |
| Properties of metal particles | Metal species | | Silver | Silver | | Silver |
| | Shape | | Substantiall y spherical | Substantially spherical | | Substantiall y spherical |
| | D10 (µm) | | 0.22 | 0.22 | | 0.29 |
| | D50 (µm) | | 0.33 | 0.35 | | 0.40 |
| | D90 (µm) | | 0.58 | 0.62 | | 0.63 |
| Evaluation results of joining material | Viscosity (Pa·s) | | 162.7 | 140.0 | | 99.3 |
| | Thixotropic index | | 0.88 | 0.88 | | 0.88 |
| Lamination method | | | (i) | (i) | (ii) | (ii) |
| Drying condition | Temperature (°C) | | 110 | 110 | | 110 |
| Firing condition | Temperature (°C) | | 250 | 250 | | 250 |
| | Pressure (MPa) | | 15 | 15 | | 15 |
| Evaluation results of joined body | Voids in joining portion | | None | None | None | None |

**[Table 2]**

| | | | Example 5 | Example 6 | Comparative example 1 | Comparative example 2 |
|---|---|---|---|---|---|---|
| Components contained in joining material (content (mass%)) | | Metal particle | (a)-2 (91) | (a)-4 (92) | (a)-2 (87) | |
| | | Solvent | Texanol (9) | Texanol (8) | Texanol (13) | |
| Properties of metal particles | Metal species | | Silver | Silver | Silver | |
| | Shape | | Substantiall y spherical | Substantiall y spherical | Substantially spherical | |
| | D10(µm) | | 0.22 | 0.32 | 0.22 | |
| | D50 (µm) | | 0.35 | 0.48 | 0.35 | |
| | D90 (µm) | | 0.62 | 0.75 | 0.62 | |
| Evaluation results of joining material | Viscosity (Pa·s) | | 95.2 | 70.0 | 34.8 | |
| | Thixotropic index | | 0.88 | 0.88 | 0.88 | |
| Lamination method | | | (i) | (i) | (i) | (ii) |
| Drying condition | Temperature (°C) | | 110 | 110 | 110 | |
| Firing condition | Temperature (°C) | | 250 | 250 | 250 | |
| | Pressure (MPa) | | 15 | 15 | 15 | |
| Evaluation results of joined body | Voids in joining portion | | None | None | Yes | Yes |

**[Table 3]**

| | | | Comparativ e example 3 | Comparativ e example 4 | Comparativ e example 5 | Comparativ e example 6 |
|---|---|---|---|---|---|---|
| Components contained in joining material (content (mass%)) | | Metal particle | (a)-2 (89) | (a)-2 (89) | (a)-2 (90) | (a)-2 (90) |
| | | Solvent | Texanol (11) | Texanol (11) | Texanol (10) | Texanol (10) |
| Properties of metal particles | Metal species | | Silver | Silver | Silver | Silver |
| | Shape | | Substantiall y spherical | Substantiall y spherical | Substantiall y spherical | Substantiall y spherical |
| | D10 (µm) | | 0.22 | 0.22 | 0.22 | 0.22 |
| | D50 (µm) | | 0.35 | 0.35 | 0.35 | 0.35 |
| | D90 (µm) | | 0.62 | 0.62 | 0.62 | 0.62 |
| Evaluation results of joining material | Viscosity (Pa·s) | | 44.0 | 44.0 | 63.4 | 63.4 |
| | Thixotropic index | | 0.88 | 0.88 | 0.88 | 0.88 |
| Lamination method | | | i (non-pressurized) | i (non-pressurized) | i (non-pressurized) | i (non-pressurized) |
| Drying condition | Temperature (°C) | | 80 | 110 | 80 | 110 |
| Firing condition | Temperature (°C) | | 250 | 250 | 250 | 250 |
| | Pressure (MPa) | | 15 | 15 | 15 | 15 |
| Evaluation results of joined body | Voids in joining portion | | Yes | Yes | Yes | Yes |

As is apparent from the above results, in Examples 1 to 6, even when the joining material was dried and fired after the backside-deposited silicon carbide chip (second component) was placed on the undried joining material during production of the joined body, generation of voids in the joining portion could be suppressed.

As is apparent from Examples 2 and 3, even if the lamination method in the laminating step was changed (either the lamination method (i) or the lamination method (ii)), generation of voids in the joining portion could be suppressed.

In Examples 1 to 6, D50 of the metal particles (a) was 0.33 µm to 0.48 µm, and the viscosity of the joining material was 70 Pa·s or greater (70 Pa·s to 162.7 Pa·s).

Further, in Examples 1 to 6, D90 of the metal particles (a) was 0.75 µm or less (0.58 µm to 0.75 µm), and D10 of the metal particles (a) was 0.22 µm or greater (0.22 µm to 0.32 µm), and therefore, it was presumed that the joining material had more preferred properties.

On the other hand, in Comparative Examples 1 to 6, even if the lamination method in the laminating step was changed (either the lamination method (i) or the lamination method (ii)), generation of voids in the joining portion could not be suppressed. In Comparative Example 1, many stripe-like voids were generated in the joining portion, and in Comparative Example 2, many point-like voids were generated in the joining portion.

In Comparative Examples 1 to 6, the viscosity of the joining material was 34.8 Pa·s to 63.4 Pa·s.

### [Industrial Applicability]

The present invention can be used for production of conductive joined bodies, in particular, semiconductor devices.

### [Reference Signs List]

- 1: Joined body,
- 11: First component,
- 11a: First surface,
- 12: Second component,
- 12a: Second surface,
- 13: Joined portion,
- 130: Joining material,
- 130': Dried joining material,
- 101, 102: Laminate

## Claims

1. A joining material comprising: metal particles containing metal particles (a); and
a solvent for dispersing the metal particles, wherein
the joining material has a viscosity, as measured according to JIS Z 3285:2017, of 70 Pa· s or greater, and
the metal particles (a) have a particle size D50 at a cumulative volume of 50%, as measured by laser diffraction/scattering particle size distribution measurement, of greater than 0.15 µm and less than 0.8 µm.

2. The joining material according to claim 1, wherein
the metal particles (a) are silver particles.

3. The joining material according to claim 1 or 2, wherein
the joining material has a thixotropic index, as measured according to JIS Z 3285:2017, in a range of 0.55 to 0.95.

4. The joining material according to claim 1 or 2, wherein
the metal particles include metal particles (b) different from the metal particles (a), and
the metal particles (b) have a particle size D50 at a cumulative volume of 50%, as measured by laser diffraction/scattering particle size distribution measurement, of 0.15 µm or less, or of 0.8 µm or greater.

5. The joining material according to claim 1 or 2, further comprising, in the solvent thereof, a resin component which is a curable resin, a non-curable resin or a thermoplastic resin, wherein
a ratio of a content of the resin component to a content of the metal particles in the joining material is less than 0.01 mass%.

6. The joining material according to claim 1 or 2, wherein
the joining material does not contain, in the solvent thereof, a resin component which is a curable resin, a non-curable resin or a thermoplastic resin.

7. A method of producing a joined body in which a conductive first component and a conductive second component are bonded via a conductive joining portion, the method comprising:
attaching the joining material according to claim 1 or 2 to a first surface of the first component or a second surface of the second component;
laminating the first component and the second component with the attached joining material therebetween to produce a laminate;
drying the joining material in the laminate to form a dried joining material; and
firing the dried joining material at a temperature higher than a temperature at which the joining material has been dried to thereby form the joining portion from the dried joining material.
